# EUROPÄISCHE PATENTSCHRIFT

(11) **EP 0 765 212 B1**
(45) Veröffentlichungstag und Bekanntmachung des Hinweises auf die Patenterteilung: **03.05.2000**
(21) Anmeldenummer: 96904763.8
(22) Anmeldetag: 13.02.1996
(51) Int. Cl.: B29C 45/46, B29C 45/03

(54) **VORRICHTUNG ZUM DRUCKVERGIESSEN VON AUFSCHMELZBAREN KUNSTSTOFFMATERIALIEN**
DEVICE FOR PRESSURE CASTING MELTABLE SYNTHETIC MATERIALS
DISPOSITIF DE MOULAGE SOUS PRESSION DE MATERIAUX SYNTHETIQUES FUSIBLES

(30) Priorität: 25.03.1995 DE 19511062
(43) Veröffentlichungstag der Anmeldung: 02.04.1997
(73) Patentinhaber: S + T Apparate- und Vorrichtungsbau GmbH, 58644 Iserlohn (DE)
(72) Erfinder: THUR, Ulrich, D-58675 Hemer (DE)
(74) Vertreter: Patentanwälte Meinke, Dabringhaus und Partner
(86) Internationale Anmeldenummer: EP9600603
(87) Internationale Veröffentlichungsnummer: WO9630187

(56) Entgegenhaltungen:
- EP-A- 0 417 005
- WO-A-95/26263
- CH-A- 230 115
- DE-C- 517 510
- FR-A- 2 086 036
- GB-A- 2 181 386
- US-A- 3 556 403
- US-A- 5 106 291
- DATABASE WPI Section Ch, Week 9301 Derwent Publications Ltd., London, GB; Class A11, AN 93-004950 XP002004806 & JP,A,04 333 357 (NISSAN MOTOR CO LTD) , 20.November 1992

## Beschreibung

Die Erfindung richtet sich auf eine Vorrichtung der im Oberbegriff des Anspruches 1 angegebenen Gattung.

Eine derartige Vorrichtung, die Kunststoffmaterial durch ein geheiztes Metallbad aufschmelzt, zeigt die CH-A 230 115, wobei dort die Schmelzanlage sehr prinzipiell offenbart ist.

Vollhydraulische Spritzgießmaschinen zeigt beispielsweise eine Werbeunterlage der Firma Arburg, Allrounder M: Vollhydraulische Spritzgießmaschine, Druckdatum 2/94, wobei dort eine Anlage dargestellt ist, die in der Regel stehend bedient wird. Eine eine sitzende Arbeitsweise ermöglichende Vorrichtung mit Anguß in der Formteilungsebene zeigt eine Werbeunterlage der Firma Bulter Designs Limited "Bulter 10/90 V Insert Moding Machine". Den hier beschriebenen bekannten Lösungen ist gemein, daß ein vergleichsweise hoher Sicherungsaufwand betrieben werden muß, um die bedienenden Personen zu schützen. Auch das Auf- und Zufahren der Formen ist vergleichsweise aufwendig, eine Zweihand-Bedienung zwingend erforderlich.

Aus der DE-OS 20 38 413 ist eine Hochdruck-Spritzgußpresse bekannt, bei der über einen Druckzylinder das Kunststoffmaterial in eine von einem Gegendruckstempel zusammengehaltene Form unter hohem Druck eingebracht wird. Demgegenüber bezieht sich die vorliegende Erfindung auf z.B. auch Heißschmelzkleber verarbeitende Spritzgußmaschinen. Dieses Material ist vergleichsweise stark hydroskopisch und bei einer Verarbeitungstemperatur von beispielsweise 200°C niedrigviskos.

Die EP-A-0 417 005 zeigt einen Gießautomaten mit im Inneren der Anlage angeordneter Einspritzkammer aus einem Schmelzreservoir, wobei die US-3 556 403 und 5 106 291 ebenfalls derartige Hochdruckspritzanlagen offenbaren. Die FR-A 2 086 036 beschreibt ein entsprechendes Spritzverfahren unter Druck, während die GB-A-2 181 386 eine aufklappbare Spritzform zeigt, mit der mit Hilfe einer von Hand zu bedienenden Spritzpistole das zu schmelzende Polypropylen zugeführt wird.

Aufgabe der Erfindung ist daher, eine Vorrichtung zu schaffen, die sowohl einfach zu handhaben ist, die einen hohen Sicherheitsstandard gegen Verbrennungen durch unkontrolliert austretendes heißes Schmelzmaterial bietet, die einen Mehrstellen-Arbeitsplatz möglich macht und die möglichst kurze Wege des geschmolzenen Materiales zum Verarbeitungsort gewährleistet.

Bei einer Vorrichtung der eingangs bezeichneten Art wird diese Aufgabe gemäß der Erfindung durch das kennzeichnende Merkmal des Anspruches 1 gelöst.

Zweckmäßige weiterbildungen der Erfindung sind in den abhängigen Ansprüchen beschrieben.

Dadurch daß der Heißschmelzvergußwerkstoff durch die Arbeitstischplatte von unten in die Form gebracht wird, werden eine Reihe von Vorteilen erreicht. Dies gilt auch für die Art der eingesetzten Schmelzanlage sowie für das beheizte, pneumatisch gesteuerte Düsennadelventil bzw. die Vielnadeleinheit worauf weiter unten noch eingegangen wird.

Dadurch, daß die Düse fest installierbar ist, d.h. sie während des Produktionszyklus nicht bewegt wird - im Gegensatz zu herkömmlichen Systemen, z.B. Spritzgußverfahren, freier Verguß im Dosierverfahren -, entstehen hier keine Abnutzungserscheinungen an den Führungseinheiten - weil keine vorhanden sind. Desweiteren ist die Abdichtung zwischen Düse und Werkzeug wesentlich einfacher zu realisieren.

Einen weiteren Vorteil bringt die Anordnung von unten bei Aufschmelzen des Resttropfen vom Material. Dieser Resttropfen entsteht unvermeidlich nach dem Schließen des Düsennadelventils und lagert sich an der Spitze der Düse ab. Bei hängend angeordneten Düsen friert diese ein und wird beim nächsten Schuß mit ins Werkzeug eingeschossen und kann hierbei zu Störungen im Strömungsverlauf führen, im Extremfall zur Verstopfung des Angußkanals oder er gelangt mit in die Kavität und lagert sich an der Oberfläche ab - sehr störend bei dekorativen Oberflächen.

Bei horizontal angeordneten Systemen tritt dieser Fehler nicht auf. Hier wird der Tropfen, wie in der Heißkanaltechnik, zusätzlich als Abdichtmedium benutzt. Jedoch entsteht mit der Zeit an der Düse eine unansehliche Verunreinigung, die im Extremfall vercracken kann und somit wieder zu Störungen bei der Abdichtung Düse gegen Werkzeug führen kann.

Bei der Anordnung von unten werden alle Vorteile vereint und der Resttropfen wird während der Kühl- und Aufschmelzphase flüssig gehalten und bei der Entformung des Teiles sauber mit dem Anguß entfernt.

Darüber hinaus ist ein weiterer Sicherheitsvorteil darin zu sehen, daß selbst bei einer Fehlbetätigung, d.h. einem Einbringen von Heißschmelzwerkstoff in eine noch geöffnete Form, der Strahl des heißen Kunststoffes nicht, wie bei anderen Formteilen möglich, auf die bedienende Person gerichtet ist, so daß es hier nicht unmittelbar zu Verbrennungen kommen kann, selbst dann nicht, wenn, wie an sich möglich, eine Schutzhaube um die Form nicht vorgesehen ist.

Dadurch, daß eine dem Arbeitstisch zugeordnete Tankschmelzanlage mit einem druckdichten Vorschmelztank und einer Hauptschmelzzone vorgesehen ist, fördert auch dies die kompakte Bauweise und eine einfache Bedienung. Durch kurze Wege, die die Integration der Tankschmelzanlage ermöglichen, wird nicht nur Energie durch kürzere Heizzeiten gespart, auch ermöglicht dies die Reduzierung von nicht unmittelbar einsetzbarem Schmelzmaterial etwa bei einem Wechsel des Vergußwerkstoffes.

Eine zweckmäßige Ausgestaltung besteht dabei darin, die Zuführung des Vergußgutes innerhalb der Arbeitstischplatte vorzusehen, was insbesondere die Möglichkeit eröffnet, einen auch ergonomisch günstigen Arbeitsplatz zu schaffen, wobei die Druckgußzuführung innerhalb der Arbeitstischplatte es auch möglich macht, störungsfrei mehr als eine Form an einem Arbeitsplatz vorzusehen. Die Arbeitsfläche bleibt ansonsten völlig frei von beispielsweise Zuführaggregaten oder anderen störenden Elementen.

Die Erfindung sieht auch eine Förderpumpe, insbesondere Zahnradförderpumpe, zum Fördern der Vergußmasse in verschiedenen Fließgeschwindigkeiten vor.

Damit in Verbindung kann erfindungsgemäß ein pneumatisch geregelter Bypass zur Drucksteuerung des zu fördernden Vergußwerkstoffes vorgesehen sein.

Eine elektronisch geregelte Zahnradpumpe läßt eine einfache Beeinflussung der Fließgeschwindigkeiten zu. Ein pneumatisch geregelter Bypass läßt eine Verfahrensweise bei ganz definierten Drücken zu. So ist es damit möglich, vorprogrammierbare Druck- und/oder Geschwindigkeitsprofile während der Bearbeitung zu fahren, so etwa mittels einer Stützdruckeinrichtung, um den Werkstoff mit einem definierten Vordruck zu versorgen. Wird in einer Steuerung auch gleichzeitig die Temperatur mit geregelt, ergeben sich eine Fülle weiterer Vorteile:

Der Massedruck ist im wesentlichen für die Ausformung in der Kavität zuständig, d.h. je höher der Massedruck, desto vollständiger wird die Kavität ausgefüllt. Ist der Massedruck jedoch zu hoch (größer 40 bar), so ergeben sich erhebliche Abdichtprobleme im Werkzeug, weil die Vergußwerkstoffe im Gegensatz zu den Spritzgußwerkstoffen sehr niedrigviskos sind. Aufgrund der hohen Adhäsion und der Viskosität sind Spritzgußmaschinen hier nicht als Verarbeitungsmaschine sinnvoll. Aufgrund dessen ist man bestrebt, bei möglichst niedrigen Drücken (ca. 10 bis 15 bar) zu arbeiten.

Um jedoch eine genügend gute Ausformung ohne Einfallstellen zu erreichen, wird über die Nachdrückzeit während der Aushärtzeit über den noch flüssigen Kern Material nachgeschoben. Die Dauer der Nachdrückzeit hängt wesentlich von der Materialmenge, der spezifischen Werkzeugoberfläche, dem Wärmeübergang, der Werkzeug- und Angußgeometrie ab.

Mit der Pumpendrehzahl beeinflußt man die Vergußgeschwindigkeit im Werkzeug. Man kann hiermit die Fließgeschwindigkeit unabhängig vom Massedruck regeln und damit den Druckanstieg im Werkzeug zeitlich definiert durchführen, d.h. man kann Druckmaxima zeitlich verschieben. Dies ist notwendig, damit die Kavitätsentlüftungen zum richtigen Zeitpunkt wirksam werden.

Die Höhe der Massetemperatur bestimmt die Viskosität des Vergußwerkstoffes und damit wesentlich seine Verarbeitungseigenschaften. Wird die Verguß-/Massetemperatur zu hoch gewählt, besteht die Gefahr des Überfüllens des Werkzeuges und weiterhin ein schnelles vercracken von naturfarbenen Werkstoffen.

Um eine optimale Steuerungsmöglichkeit zu erreichen, sieht die Erfindung auch ein piezoelektrisch-geregeltes Ventil vor.

Die Erfindung sieht ein beheiztes, pneumatisch gesteuertes Düsennadelventil und/oder eine Vielnadeleinheit vor, wobei, wie oben schon ausgeführt, die die Düse als fest installierter, integraler Bestandteil des Arbeitstisches ausgebildet sein kann.

Zweckmäßig ist eine Einrichtung zum Kühlen oder Temperieren des Werkzeuges und/oder des das Werkzeug umgebenden Arbeitstischbereiches, wie dies die Erfindung ebenfalls vorsieht. Damit ist es möglich, auf die Aushärtzeit, und damit den gesamten Zyklus eines Gußvorganges, Einfluß zu nehmen, da sich die Aushärtzeiten insbesondere nach der Kühl- und/oder Nachdrückzeit bestimmt. Es versteht sich von selbst, daß die Kühlung des Arbeitstischbereiches für die arbeitende Person von besonderer Bedeutung nicht nur in warmen Ländern ist.

Die Erfindung sieht auch vor, daß die Angußkanäle zu den Werkzeugkavitäten von einem jeweiligen Teflon-Einsatz gebildet sind, wobei auch vorgesehen sein kann, die Druckformen als Einlegeformen aus Aluminium auszubilden.

Durch die Teflon-Einsätze wird der Temperaturübergang zur Maschine bzw. zum Werkzeug verhindert. Dabei bietet Teflon einen weiteren Vorteil, weil die bekannten Heißschmelzvergußwerkstoffe wenig oder keine Haftung zu dieser Oberflächenschicht haben. Somit ergibt sich eine leichte Entfernbarkeit des Angusses, soweit dieser vorhanden sein sollte. Setzt man den entsprechend beschichteten Einsatz direkt in das Werkzeugunterteil, wie dies die Erfindung ja vorsieht, kann man ggf. auf den Anguß ganz verzichten mit den damit verbundenen Vorteilen.

Dadurch, daß in einer Ausgestaltung der Erfindung die Werkzeuge als Einlegeformen ausgebildet sind, sind sie sehr preiswert herzustellen.

Diese Aluminium-Werkzeuge sind besonders geeignet für Carrier- und andere Systeme zur voll- oder halbautomatischen Verarbeitung, da sie alle mit dem Werkstoff Aluminium verbundenen Vorteile, wie leichte mechanische Bearbeitung, guter Wärmeübergang, Korrosionsbeständigkeit u. dgl., aufweisen.

Die Erfindung sieht auch eine elektrisch/elektronische Steuerung, insbesondere zur Regelung der Aufschmelz- und/oder Verarbeitungstemperatur, des Druck- und Geschwindigkeitsverlaufes und/oder der Nachdruckzeiten vor, wobei der Gesamtprozeß über eine SPS-Systemsteuerung geführt sein kann. Damit ist es möglich, eine Menüführung über ein softwaremäßig verriegelbares Eingabesystem vorzunehmen, in welchem alle Verfahrensparameter verändert und eingestellt werden können. Diese Verfahrensparameter können einzeln angesteuert und verwaltet werden, d.h. alle Zusatzaggregate, wie z.B. Kühl-/Temperierungeizrichtungen, Stückzähler, Timer, Heizungen etc. können einzeln oder in Gruppen vor falschen Zugriffen gesichert werden. Dies bietet besonderen Vorteil bei der Qualitätssicherung und der Produktionsdaten-Erfassung und -Auswertung. Es liegt somit ein auditierfähiges System vor, wobei die Maschine über die Steuerung online-fähig wird. Sie kann damit als Einzelaggregat ausgebildet sein oder auch in eine bestehende oder neu einzurichtende Produktions- oder Montagestraße integriert werden.

Die Erfindung ist nachstehend anhand der Zeichnung beispielsweise näher erläuert. Diese zeigt in
- Fig. 1: einen Schnitt, teilweise vereinfacht, durch eine erfindungsgemäße Vorrichtung sowie in
- Fig. 2: eine Detaildarstellung des Arbeitstisches im Bereich der Gußform gemäß Kreisausschnitt II in Fig. 1.

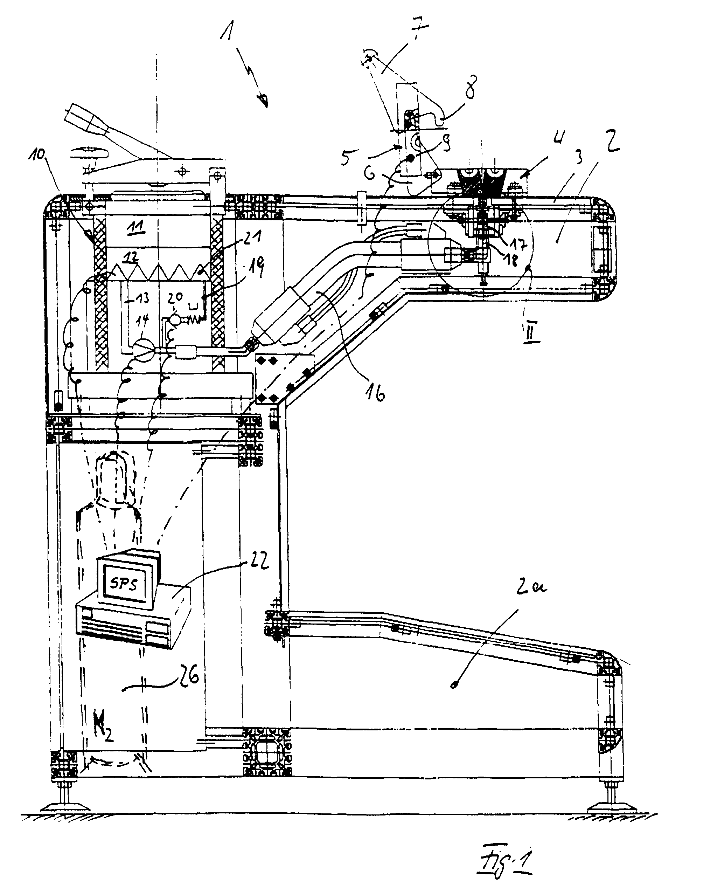

Die allgemein mit 1 bezeichnete Vorrichtung ist im Ausführungsbeispiel gemäß Fig. 1 in Art eines Tisches gestaltet, derart, daß sie als Sitz- oder Steharbeitsplatz verwendet werden kann. Der gesamte tischförmige Vorrichtungsrahmen ist aus Aluminium-Profilen mit zwischengesteckten Paneelen gestaltet, woraus sich eine spezielle günstige Handhabbarkeit, die Wärmeentwicklung betreffend, ergibt. Der Tischplattenbereich ist allgemein mit 2 bezeichnet. Er trägt auf seiner Oberseite eine Werkzeugträgerplatte 3 mit daran festverschraubtem Gußformunterteil 4, wobei ein Gußformoberteil 5 über einen Schwenkrahmen 6 mit einem Handhabungshebel 7 und einer Verriegelung 8 am Gußformunterteil 4 schwenkbar gelagert ist. Am Schwenkrahmen 6 ist zusätzlich ein Steuerschalter 9 vorgesehen.

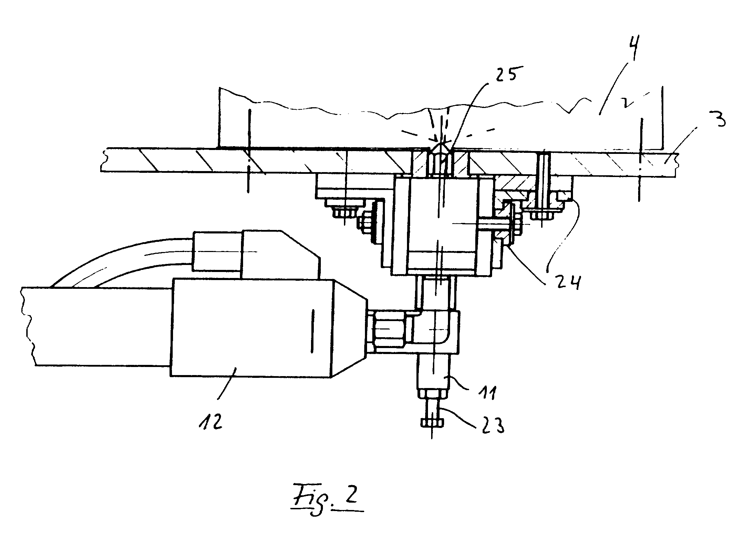

Wie aus Fig. 1 erkennbar, ist im hinteren Bereich der Tischplatte 2 eine Aufschmelzeinrichtung, allgemein mit 10 bezeichnet, für den Heißschmelzvergußwerkstoff vorgesehen mit einem Vorschmelztank 11 und einer Hauptschmelzzone 12 mit Heizungen 21, aus der der Vergußwerkstoff ausgesogen wird, und zwar über eine Leitung 13 und eine Zahnradpumpe 14, wobei der Vergußwerkstoff dann über eine beheizte Förderstrecke 16 dem Injektionskanal 17 mit Nadelventil 18 zugeführt wird, um daraufhin in die geschlossene Form 4/5 eingespritzt zu werden. Dieser letztere Bereich ist in Fig. 2 vergrößert dargestellt.

Aus Fig. 1 ist auch erkennbar, daß im Bereich des Ausganges der Pumpe 14 eine Bypassleitung 19 vorgesehen ist mit einem gesteuerten Rückschlagventil als Bypassventil 20, um je nach zur Verfügung stehender Druckleistung das aufgeschmelzte Material wenigstens in einem Teilstrom in die Hauptschmelzzone zurückzufördern.

Über die in Fig. 1 strichpunktiert vereinfacht wiedergegebenen Leitungen sind der Steuerschalter 9, die Reizungen 21 der Hauptschmelzzone 12, die Zahnradpumpe 14 und das Bypassventil 20 an eine hier vereinfacht mit SPS angegebene und nur symbolisch dargestellte Rechenanlage 22 angeschlossen.

In Fig. 2 ist vergrößert der Bereich der Materialeinspritzung in das fest montierte Formenunterteil 4 dargestellt.

Aus dem beheizten Zuführschlauch 16 wird das zu verspritzende Material dem Nadelventil 18 zugeführt, das mit einer Nadelhubverstellung 23 versehen und von einer Isolierung 24 umgeben ist. Der ortsfeste Spritznippel ist mit 25 bezeichnet.

Nicht näher dargestellt ist die Möglichkeit, z.B. den Innenraum der Tischplatte 2 mit einer eigenen Kühlung oder Temperierung vorzusehen ebenso wie das Werkzeug gekühlt oder temperiert sein kann. Hierzu bietet die Aluminium-Konstruktion eine besonders günstige Gestaltungsmöglichkeit

Die Werkzeugspannvorrichtung mit Hilfe des Handhabungshebels 7 und der Sperre 8 kann, ohne daß die Erfindung hierauf beschränkt ist, wie dargestellt mechanisch ausgeführt sein, da bei der hier gewählten Konstruktion in der Regel weitere Sicherheitsschutzvorrichtungen nicht notwendig sind. Über den Sensor 9 kann abgefragt werden, ob das Werkzeug geöffnet oder geschlossen ist. Auch die Hebelstellung des Handhabungshebels 7 kann entsprechend elektronisch erfaßt werden.

Nicht näher dargestellt ist die Möglichkeit, z.B. bei Kleberwechsel etwa in den mit 2a bezeichneten Fußraum der Vorrichtung 1 einen speziellen Sicherheitsbehälter vorzusehen.

Natürlich ist das beschriebene Ausführungsbeispiel der Erfindung noch in vielfacher Hinsicht abzuändern, ohne den Grundgedanken zu verlassen. So kann die Schmelzanlage auch im unteren Bereich des rückwärtigen Teiles der Vorrichtung 1 vorgesehen sein, neben der Tischplatte in der hier dargestellten einfachen Weise kann auch eine gewinkelte Tischplatte vorgesehen sein, um gleichzeitig zwei Fußformen von einem Arbeitsplatz aus bedienen zu können. Es kann auch eine Arbeitsplatz-U-Form vorgesehen sein, ebenso wie eine Reihe nebeneinander liegender Mehrfach-Spritzformen in einem großen längeren Tischbereich. Die vorgesehene Schutzgaseinrichtung kann dort ebenfalls untergebracht sein, andeutungsweise ist eine Nz-Flasche 26 doppelt gestrichelt dargestellt u. dgl. mehr.

## Patentansprüche

1. Vorrichtung (1) zum Druckvergießen von Heißschmelzvergußwerkstoffen mit einem Arbeitsfeld und einer darin angeordneten, geteilten Gußform (4/5) mit einem Einspritzpunkt (25) außerhalb der Formteilungsebene, wobei die Gußform (4/5) ein liegendes Formunterteil (4) mit einem im wesentlichen senkrecht zum Arbeitsfeld liegenden Einspritzkanal (17) mit Einspritzpunkt (25) und ein auf- und abschwenkbares Gußformoberteil (5) aufweist mit zugeordneter Tankschmelzanlage (11,12,21) mit einem druckdichten Vorschmelztank (11) und einer Hauptschmelzzone (12),
dadurch gekennzeichnet,
daß das Arbeitsfeld von einer an ihrem einen Ende freien Arbeitstischplatte (2) mit einer Arbeitstischebene (3) gebildet ist mit einer Zuführung des Vergußwerkstoffes innerhalb der Arbeitstischplatte (2) und mit einem beheizten, pneumatisch gesteuerten Düsennadelventil (18) oder einer Vielnadeleinheit.

2. Vorrichtung nach Anspruch 1,
gekennzeichnet durch
eine Zahnrad-Förderpumpe (14) zum Fördern der Vergußmasse in verschiedenen Fließgeschwindigkeiten.

3. Vorrichtug nach Anspruch 1 oder 2,
gekennzeichnet durch
einen pneumatisch geregelten Bypass (19) zur Drucksteuerung des zu fördernden Vergußwerkstoffes.

4. Vorrichtung nach Anspruch 3,
gekennzeichnet durch
ein piezoelektrisch-geregeltes Bypass-Ventil (20).

5. Vorrichtung nach einem der vorangehenden Ansprüche,
gekennzeichnet durch
daß die Düse (18) als fest installierter, integraler Bestandteil des Arbeitstisches (3) ausgebildet ist.

6. Vorrichtung nach einem der vorangehenden Ansprüche,
gekennzeichnet durch
eine Einrichtung zum Kühlen oder Temperieren des Werkzeuges und/oder des das Werkzeug umgebenden Arbeitstischbereiches (3).

7. Vorrichtung einem der vorangehenden Ansprüche,
dadurch gekennzeichnet,
daß die Angußkanäle zu den Werkzeugkavitäten von einem jeweiligen Teflon-Einsatz gebildet sind.

8. Vorrichtung nach einem der vorangehenden Ansprüche,
dadurch gekennzeichnet,
daß die Druckformen als Einlegeformen aus Aluminium ausgebildet sind.

9. Vorrichtung nach einem der vorangehenden Ansprüche,
gekennzeichnet durch
eine elektrisch/elektronische Steuerung (22), insbesondere zur Regelung der Aufschmelztemperatur, der Verarbeitungstemperatur, des Druckverlaufes und/oder der Nachdruckzeiten.

## Claims

1. Apparatus (1) for the casting under pressure of hot melt casting materials with a working area and a divided casting mould (4/5) disposed therein with an injection point (25) outside the mould division plane, wherein the casting mould (4/5) comprises a horizontal mould bottom part (4) with an injection channel (17) with injection point (25), said injection channel (17) lying substantially at right-angles to the working area, and a casting mould upper part (5) capable of being swivelled upwards and outwards, together with an associated tank melting assembly (11, 12, 21) with a pressure-proof preliminary melting tank (11) and a main melting zone (12), characterised in that the working area is formed by a working table plate (2) free at its one end with a working table plane (3), with a feeding of the casting material within the working table plate (2) and with a heated, pneumatically controlled nozzle needle valve (18) or a multi-needle unit.

2. Apparatus according to claim 1, characterised by a geared feed pump (14) for feeding the casting material at various rates of flow.

3. Apparatus according to claim 1 or 2, characterised by a pneumatically regulated by-pass (19) for the pressure control of the casting material to be fed.

4. Apparatus according to claim 3, characterised by a piezoelectrically controlled by-pass valve (20).

5. Apparatus according to one of the preceding claims, characterised in that the nozzle (18) is constructed as a permanently installed, integral part of the working table (3).

6. Apparatus according to one of the preceding claims, characterised by a device for cooling or controlling the temperature of the die and/or of the working table area (3) surrounding the die.

7. Apparatus according to one of the preceding claims, characterised in that the feed channels leading to the die cavities are formed by a respective Teflon insert.

8. Apparatus according to one of the preceding claims, characterised in that the pressure moulds are formed as punch and dies of aluminium.

9. Apparatus according to one of the preceding claims, characterised by an electric/electronic controller (22), in particular for regulating the melting temperature, the processing temperature, the pressure profile and/or the dwell pressure times.

## Revendications

1. Dispositif (1) pour le moulage par coulée sous pression de matériaux de coulée fusibles à chaud, comportant une zone de travail et un moule de coulée divisé (4/5), disposé à l'intérieur de cette zone, avec un point d'injection (25) situé à l'extérieur du plan de division du moule, dans lequel le moule de coulée (4/5) comporte une partie inférieure horizontale (4) pourvue d'un canal d'injection (17) qui est sensiblement perpendiculaire à la zone de travail, avec un point d'injection (25), et une partie supérieure (5) du moule de coulée, qui peut être soulevée et abaissée par pivotement, avec une installation associée de fusion (12,21) comportant un réservoir de fusion préalable (11) étanche à la pression et une zone de fusion principale (12),
caractérisé en ce
que la zone de travail est formée par un plateau (2) de la table de travail, qui est libre à l'une de ses extrémités, comportant un plan (3) de la table de travail, avec une amenée du matériau de coulée à l'intérieur du plateau (2) de la table de travail et une soupape à aiguille formant buse (18) chauffée et commandée pneumatiquement, ou une unité (4) à aiguilles multiples.

2. Dispositif selon la revendication 1, caractérisé par une pompe de refoulement à engrenages (14) servant à entraîner la masse de coulée à différentes vitesses d'écoulement.

3. Dispositif selon la revendication 1 ou 2, caractérisé par un by-pass réglé pneumatiquement (19) pour commander la pression du matériau de coulée devant être entraîné.

4. Dispositif selon la revendication 3, caractérisé par une soupape de by-pass (20) réglée par voie piézoélectrique.

5. Dispositif selon l'une des revendications précédentes, caractérisé en ce que la buse (18) est agencée sous la forme d'un composant installé de façon fixe et intégré de la table de travail (3).

6. Dispositif selon l'une des revendications précédentes, caractérisé par un dispositif pour refroidir ou mettre en température l'outil et/ou la zone (3) de la table de travail, qui entoure l'outil.

7. Dispositif selon l'une des revendications précédentes, caractérisé en ce que les canaux de coulée aboutissant aux cavités de l'outil sont formés par un insert respectif en Téflon.

8. Dispositif selon l'une de revendications précédentes, caractérisé en ce que les moules sous pression sont agencés sous la forme de moules d'insertion en aluminium.

9. Dispositif selon l'une des revendications précédentes, caractérisé par une commande électrique et/ou électronique (22), notamment pour la régulation de la température de fusion, de la température de traitement, de l'allure de la pression ou des durées de post-compression.
